# EUROPÄISCHE PATENTSCHRIFT

(11) **EP 2 927 537 B1**
(45) Veröffentlichungstag und Bekanntmachung des Hinweises auf die Patenterteilung: **11.03.2020**
(21) Anmeldenummer: 15150400.8
(22) Anmeldetag: 08.01.2015
(51) Int. Cl.: F16H 47/04, F16H 59/44, F16H 61/20

(54) **LANDWIRTSCHAFTLICHES FAHRZEUG**
AGRICULTURAL VEHICLE
VÉHICULE AGRICOLE

(30) Priorität: 31.03.2014 DE 102014104477
(43) Veröffentlichungstag der Anmeldung: 07.10.2015
(73) Patentinhaber: CLAAS Tractor S.A.S., 78141 Vélizy-Villacoublay Cedex (FR)
(72) Erfinder: Gohde, Thomas, 33181 Bad Wünnenberg (DE); Konrad, Helmut G., 33154 Salzkotten (DE); Erger, Lars, 34431 Marsberg (DE); Römer, Jens, 91430 Igny (FR)
(74) Vertreter: CLAAS Gruppe

(56) Entgegenhaltungen:
- EP-A2- 1 251 298
- DE-A1-102008 043 560
- US-B1- 6 169 950

## Beschreibung

Die Erfindung betrifft ein landwirtschaftliches Fahrzeug, insbesondere einen Traktor, gemäß dem Oberbegriff des Anspruchs 1.
Landwirtschaftliche Fahrzeuge wie insbesondere Traktoren werden zunehmend mit hydrostatisch-mechanisch leistungsverzweigten Getrieben im Fahrantriebsstrang ausgestattet. Es handelt sich hierbei um Getriebe, bei denen eine vom Verbrennungsmotor bereitgestellte Eingangsleistung in mechanische und hydraulische Leistungsanteile zunächst aufgeteilt ("verzweigt") und nach möglicher Umformung (hinsichtlich Drehzahl, Drehmoment) in den Teilzweigen wieder zusammengeführt ("summiert") wird. Beim Zusammenführen und/oder beim Aufteilen der Zweige kommt zumindest ein Planetengetriebe zum Einsatz.
Der hydraulische Antriebszweig umfasst dabei eine verstellbare Hydropumpe und einen damit gekoppelten verstellbaren Hydromotor. Die im hydraulischen Leistungszweig übertragene Antriebsleistung lässt sich so auf einfache Weise (Änderung des Schluckvolumens eines oder beider Hydrostaten) stufenlos in der Drehzahl verändern. Der mechanische Antriebszweig weist dagegen eine entweder starre oder nur in Stufen veränderliche Drehzahlkopplung gegenüber der Eingangsdrehzahl des Getriebes auf. Durch die Zusammenführung von mechanischem Antriebsstrang, der einen hohen Wirkungsgrad bei der Leistungsübertragung aufweist, und hydraulischem Antriebszweig, dessen Drehzahl sich stufenlos verändern lässt, kann man die Übersetzung des hydrostatisch-mechanisch leistungsverzweigten Getriebes auf vorteilhafte Weise stufenlos verändern. Beispielhaft sei auf die EP 2 503 190 A1 verwiesen, die ein derartiges Getriebe offenbart. Ein solches Getriebe ist auch aus der US 6 169 950 B1 bekannt, die alle Merkmale des Oberbegriffes des Anspruchs 1 offenbart.
Traktoren, deren Fahrantriebsstrang ein hydrostatisch-mechanisch leistungsverzweigtes Getriebe mit stufenlos veränderlicher Übersetzung aufweist, lassen sich aufgrund der Möglichkeit einer stufenlos veränderbaren Getriebeübersetzung besonders komfortabel (keine Schaltvorgänge) fahren. Daneben besteht die Möglichkeit, durch geeignete Anpassung von Motordrehzahl und Getriebeübersetzung den Verbrennungsmotor jeweils mit möglichst geringem Kraftstoffverbrauch zu betreiben.

Eine Besonderheit hydrostatisch-mechanischer Leistungsverzweigungsgetriebe besteht in der Möglichkeit, diese im sogenannten "aktiven Stillstand" zu betreiben. Im "aktiven Stillstand" wird die (vom Verbrennungsmotor) in das Leistungsverzweigungsgetriebe eingehende Leistung zum Stillhalten der Ausgangswelle des Leistungsverzweigungsgetriebes genutzt. Das Getriebe befindet sich also im Kraftschluss, jedoch werden die Getriebezweige genau gegenläufig betrieben, so dass sich in Summe eine Ausgangsdrehzahl von null ergibt. Die Getriebeübersetzung ist in diesem Fall also unendlich. Der "aktive Stillstand" lässt sich vorteilhaft nutzen, um den Traktor - ohne Bremsbetätigung - bei laufendem Motor trotz Geländeneigung im Stand zu halten.

Da während des aktiven Stillstands ein Kraftschluss im Fahrantriebsstrang besteht und die Getriebezweige zur Erzielung der gewünschten resultierenden Ausgangsdrehzahl von null mit gewisser Leistung gegeneinander arbeiten müssen, erfordert der Zustand des aktiven Stillstands Antriebsenergie. Daher liegt während des aktiven Stillstands ein Kraftstoffverbrauch vor, der zumindest höher als bei unbelastetem Leerlauf des Verbrennungsmotors ist. Zudem entsteht aufgrund der im Getriebe auftretenden Reibung (insbesondere verursacht durch den Hydraulikölumlauf) Wärme, die auf Dauer zu Beschädigungen am Getriebe oder zu sonstigen Beeinträchtigungen (z.B. Überhitzung von Komponenten des Traktors) führen kann.

Zur Einsparung von Kraftstoff und/oder zur Vermeidung von wärmeverursachten nachteiligen Wirkungen lässt sich bekanntermaßen der Fahrantriebsstrang auch in einen Betriebsmodus "Neutral" bringen. In diesem Betriebsmodus ist der Kraftschluss zwischen Verbrennungsmotor und Rädern unterbrochen, wozu insbesondere eine im Fahrantriebsstrang vorgesehene Kupplung geöffnet ist, die beispielsweise in das Getriebe integriert sein kann. Um auch in diesem Betriebsmodus ein ungewolltes Wegrollen des Traktors (beispielsweise bei längerem Halten auf geneigtem Gelände) zu vermeiden, muss der Traktor jedoch über eine geeignete Feststellbremse verfügen, die (auch ohne dauerhafte Kontrolle des Fahrers) ein sicheres Halten des Traktors im Stillstand gewährleistet.

Aus dem Stand der Technik bekannte aktive Feststellbremsen, d.h. Feststellbremsen, die über einen Aktor betätigt werden, sind konstruktiv aufwändig, stellen einen Kostennachteil dar und sind zudem fehleranfällig.

Daneben sind manuell betätigbare Feststellbremsen bekannt, die wie beispielsweise eine Seilzugbremse durch Ziehen eines in der Fahrerkabine angeordneten Handhebels aktiviert werden. Über den Handhebel und den Seilzug werden dann Bremsbacken einer zum Beispiel den Vorderrädern zugeordneten Trommel- oder Scheibenbremse betätigt, wodurch der Traktor am Wegrollen gehindert wird. Gemäß einer heute in Traktoren verbreiteten Bauform werden zusätzliche Lamellenbremsen verwendet, die auf einer mit dem Abtriebsrad verbundenen Welle sitzen. Dabei wird die Vorderachse über eine selbstschließende Allradkupplung mitgebremst. Nachteilig an diesen Lösungen ist, dass bei einer nicht ausreichend (oder versehentlich gar nicht) angezogenen Feststellbremse dennoch der Traktor ungewollt wegrollen kann. Und selbst wenn der Zustand des Handhebels dieser Feststellbremse sensorisch überwacht wird, um diesen dem Fahrer mitzuteilen, kann es vorkommen, dass diese Zustandsinformation fehlerhaft ist. Im ungünstigsten Fall täuscht eine fehlerhaft positive Information (beispielsweise: "Bremse ist aktiv") den Fahrer und der Traktor kann dennoch wegrollen.

Es ist eine Aufgabe der vorliegenden Erfindung, ein landwirtschaftliches Fahrzeug, insbesondere einen Traktor anzugeben, bei dem mit konstruktiv geringem Aufwand in hohem Maße sichergestellt ist, dass auch bei unterbrochenem Kraftschluss des Fahrantriebsstrangs im Betriebsmodus "Neutral" ein unbeabsichtigtes Wegrollen des Fahrzeugs vermieden wird.

Die genannte Aufgabe wird gelöst durch ein Fahrzeug mit den Merkmalen des Anspruchs 1.

Erfindungsgemäß zeichnet sich das Fahrzeug aus durch Mittel, die den Fahrantriebsstrang in Abhängigkeit zumindest eines Betriebskriteriums des Fahrzeugs vom Betriebsmodus "Neutral" in einen Betriebsmodus "aktiver Stillstand" versetzen. Dabei ist zunächst gesehen worden, dass sich ein landwirtschaftliches Fahrzeug der genannten Art, dessen Fahrantriebsstrang ohne Kraftschluss ist (Betriebsmodus "Neutral"), möglicherweise in einer gefährlichen (oder gefährdenden) Situation befinden kann. So könnte das Fahrzeug ungewollt wegrollen und damit Schäden verursachen. Weiterhin wurde erkannt, dass an Fahrzeugen bereits vorhandene Sicherheitsmaßnahmen wie eine manuelle Feststellbremse zwar in vielen, jedoch nicht in allen Fällen ein Wegrollen wirksam verhindern. Erfindungsgemäß wurde als vorteilhafte Lösung erachtet, eine ohnehin am Fahrzeug vorhandene Funktionalität, nämlich eine aktive Stillstandsregelung zur zusätzlichen Erhöhung der Sicherheit in einer solchen Situation zu nutzen. Ermöglicht wird dies, indem im Betriebsmodus "Neutral" ein oder mehrere Betriebskriterien des Fahrzeugs überwacht werden und bei Vorliegen bestimmter Umstände eine selbsttätige Überführung des Antriebsstrangs in den aktiven Stillstand erfolgt. Auf diese Weise wird mit konstruktiv geringem Aufwand eine weitere Sicherheit geschaffen, um ein ungewolltes Wegrollen des Fahrzeugs zu verhindern.

Wie bereits ausgeführt, wird im Betriebsmodus "aktiver Stillstand" eine vom Verbrennungsmotor in das Leistungsverzweigungsgetriebe eingehende Leistung vorteilhaft zum Halten einer Ausgangswelle des Leistungsverzweigungsgetriebes bei einer Drehzahl null genutzt. D.h. im aktiven Stillstand laufen die Getriebezweige so gegeneinander, dass sich in Summe eine Getriebeausgangsdrehzahl von null ergibt. Ein Kraftschluss im Getriebe ist dabei gegeben, die Übersetzung des Getriebes ist unendlich groß.

Zweckmäßigerweise ist dem Fahrzeug eine manuell betätigbare Bremse, insbesondere eine Feststellbremse, zugeordnet, die dazu nutzbar ist, das Fahrzeug im Betriebsmodus "Neutral" des Fahrantriebsstrangs zu bremsen. Bei dieser Bremse handelt es sich demnach um eine Bremse, die üblicherweise einmalig in eine Feststellposition gebracht wird, um in diesem Zustand das Fahrzeug ohne weiteres Zutun des Fahrers im Stillstand zu halten. Eine konstruktiv einfache Möglichkeit besteht in einer per Seilzug betätigbaren Feststellbremse. Diese kann sich vorteilhaft über eine Betätigungseinrichtung bedienen lassen. Der Betätigungseinrichtung ist vorteilhaft ein Sensor zur Erfassung deren Zustands zugeordnet.

Eine sichere Erkennung eines Wegrollens des Fahrzeugs lässt sich schaffen, indem das Fahrzeug über eine Einrichtung zur Erfassung einer Geschwindigkeit des Fahrzeugs verfügt. Je genauer eine solche Geschwindigkeitserfassung stattfindet, desto rechtzeitiger kann die entgegenwirkende Maßnahme des aktiven Stillstands eingeleitet werden. Verschiedene Arten der Erfassung sind denkbar, beispielsweise gestützt auf eine Erfassung der Drehung der Radwelle bzw. Getriebeausgangswelle und/oder basierend auf satellitengestützter Navigation (GPS).

Grundsätzlich können verschiedene Betriebskriterien herangezogen werden, in deren Abhängigkeit über das Einleiten des "aktiven Stillstands" entschieden wird. Zweckmäßigerweise handelt es sich bei dem zumindest einen Betriebskriterium, in dessen bzw. deren Abhängigkeit der "aktive Stillstand" herbeigeführt wird, um: eine sensorisch erfasste Geschwindigkeit des Fahrzeugs, einen sensorisch erfassten Zustand der Bremse, einen sensorisch erfassten Zustand bezüglich der Anwesenheit eines Fahrers (an oder in dem Fahrzeug), einen Betriebszustand des Verbrennungsmotors, einen Betriebsmodus des Fahrantriebsstrangs.

Grundsätzlich ist es möglich, den "aktiven Stillstand" zeitlich unmittelbar ab Vorliegen eines oder mehrerer der Betriebskriterien einzuleiten. Auf diese Weise ergibt sich eine kürzest mögliche Reaktionszeit. Jedoch ist es ebenfalls denkbar, dass das Herbeiführen des "aktiven Stillstands" mit einer zeitlichen Verzögerung ab Vorliegen eines oder mehrerer der Betriebskriterien stattfindet. Auf diese Weise könnte eine möglicherweise ungewollte selbsttätige Herbeiführung des "aktiven Stillstands" in zeitlich nur sehr kurz bestehenden (vorübergehenden) Situationen vermieden werden.

Es ist zweckmäßig, dass die erfindungsgemäß vorgeschlagene Herbeiführung des "aktiven Stillstands" nur in bestimmten Situationen stattfindet. Insbesondere erweist es sich sinnvoll, den Antriebsstrang aus dem Betriebsmodus "Neutral" nur dann in den "aktiven Stillstand" zu versetzen, wenn zumindest die folgenden Bedingungen zugleich erfüllt sind: der Verbrennungsmotor läuft und der Fahrantriebsstrang befindet sich im Betriebsmodus "Neutral".

Es kann weiterhin vorteilhaft sein, die Maßnahme des "aktiven Stillstands" an eine oder mehrere weitere der folgenden Bedingungen zu knüpfen: 1.) gemäß dem sensorisch erfassten Zustand der Betätigungseinrichtung ist die Bremse aktiviert und/oder 2.) die sensorisch erfasste Geschwindigkeit des Fahrzeugs und/oder ein zurückgelegter Weg des Fahrzeugs ist ungleich null oder größer als ein festgelegter Grenzwert und/oder 3.) gemäß einem sensorisch erfassten Zustand ist der Fahrersitz des Fahrzeugs unbesetzt.

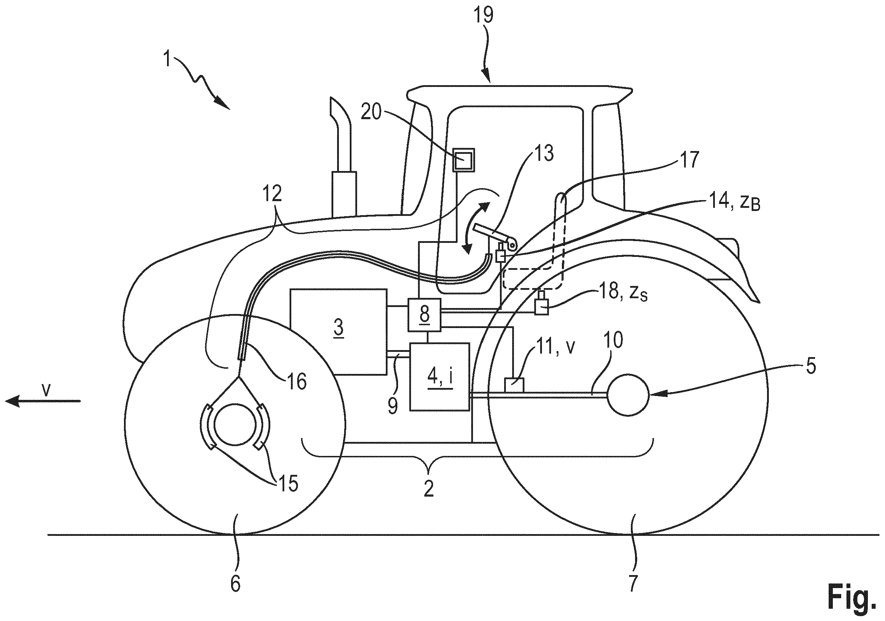

Die Erfindung wird nachfolgend anhand eines Ausführungsbeispiels beschrieben. Dazu sei auf die Zeichnung verwiesen. Darin zeigt die einzige
- Fig.: ein erfindungsgemäßes landwirtschaftliches Fahrzeug in Form eines Traktors in Seitenansicht.

Die einzige Fig. zeigt ein landwirtschaftliches Fahrzeug in Form eines Traktors 1 in einer schematischen Seitenansicht. Der Traktor 1 ist zur Fahrt über einen Untergrund auf für sich gesehen übliche Weise mit Vorderrädern 6 und Hinterrädern 7 ausgestattet. Weiterhin verfügt der Traktor 1 über einen Fahrantriebsstrang 2. Der Fahrantriebsstrang 2 umfasst als wesentliche Komponenten einen im vorderen Bereich des Traktors 1 angeordneten Verbrennungsmotor 3, ein hydrostatisch-mechanisches Leistungsverzweigungsgetriebe 4 sowie eine Hinterachse 5, an welche Hinterräder 7 montiert sind.

Es sei angemerkt, dass der Traktor 1 alternativ zu den gezeigten Vorder- und Hinterrädern 6, 7 auch mit anderen Bodeneingriffsmitteln ausgestattet sein kann, beispielsweise mit Raupenfahrwerken. Diese können teilweise oder vollständig die gezeigten Räder ersetzen.

Im gezeigten Ausführungsbeispiel ist der Verbrennungsmotor 3 über eine Motorabtriebswelle 9 mit dem hydrostatisch-mechanischen Leistungsverzweigungsgetriebe 4 in Antriebsverbindung bringbar. Zwischen dem Verbrennungsmotor 3 und dem hydrostatisch-mechanischen Leistungsverzweigungsgetriebe 4 kann eine (hier nicht dargestellte) Kupplung angeordnet sein, die ein Unterbrechung der Antriebsverbindung ermöglicht.

Das hydrostatisch-mechanische Leistungsverzweigungsgetriebe 4 weist eine stufenlos veränderliche Übersetzung i auf, die aus der Überlagerung eines mechanischen und eines hydraulischen Antriebszweigs innerhalb des Getriebes 4 resultiert. Es kann sich bei dem hydrostatisch-mechanischen Leistungsverzweigungsgetriebe 4 beispielsweise um ein wie in der EP 2 503 190 A1 beschriebenes Getriebe handeln.

Das hydrostatisch-mechanische Leistungsverzweigungsgetriebe 4 steht über eine Getriebeausgangswelle 10 mit der Hinterachse 5 in Antriebsverbindung. An die Hinterachse 5 sind die Hinterräder 7 montiert. Der gezeigte Traktor 1 weist somit einen Heckantrieb auf. Durch eine (hier nicht gezeigte) geeignete weitere Antriebsverbindung zwischen Leistungsverzweigungsgetriebe 4 und Vorderrädern 6 könnten auch die Vorderräder 6 angetrieben sein, um insgesamt an dem Traktor einen Allradantrieb auszubilden.

Der zuvor erläuterte Fahrantriebsstrang 2 des Traktors 1 ist für sich gesehen an Traktoren bekannt. Dieser ermöglicht auf für den Fahrer komfortable Weise eine stufenlose Veränderung einer Fahrgeschwindigkeit v des Traktors 1 aus dem Stillstand zu einer gewünschten Fahrgeschwindigkeit. Daneben besteht die Möglichkeit, durch geeignete Anpassung von Motordrehzahl und Getriebeübersetzung i den Verbrennungsmotor 3 jeweils mit möglichst geringem Kraftstoffverbrauch zu betreiben.

Bei dem hydrostatisch-mechanischen Leistungsverzweigungsgetriebe 4 besteht die Möglichkeit, dieses im sogenannten "aktiven Stillstand" zu betreiben. Im "aktiven Stillstand" wird die vom Verbrennungsmotor 3 in das Leistungsverzweigungsgetriebe 4 eingehende Leistung zum Stillhalten der Ausgangswelle 10 genutzt. Das Leistungsverzweigungsgetriebe 4 befindet sich dabei im Kraftschluss, wobei die Getriebezweige genau gegenläufig betrieben werden, so dass sich in Summe eine Ausgangsdrehzahl der Ausgangswelle 10 von null ergibt. Die Getriebeübersetzung i ist in diesem Fall also unendlich. Der "aktive Stillstand" lässt sich vorteilhaft nutzen, um den Traktor 1 - ohne Bremsbetätigung durch den Fahrer - bei laufendem Verbrennungsmotor 3 auch bei Geländeneigung im Stand zu halten.

Dabei tritt jedoch ein erhöhter Kraftstoffverbrauch auf und es können wärmeverursachte nachteilige Effekte (Überhitzung von Komponenten des Getriebes 4 bzw. des Traktors 1 allgemein) entstehen. Um dies zu vermeiden, lässt sich der Fahrantriebsstrang 2 auch in einen Betriebsmodus "Neutral" bringen. In diesem Betriebsmodus ist der Kraftschluss zwischen Verbrennungsmotor 3 und Rädern 7 unterbrochen, beispielsweise durch Öffnen einer im Antriebsstrang 2 vorgesehenen Kupplung (hier nicht gezeigt). Diese Kupplung kann beispielsweise baulich in ein Gehäuse des Leistungsverzweigungsgetriebes 4 integriert sein. Durch die Unterbrechung des Kraftschlusses wird erreicht, dass die Komponenten des hydrostatisch-mechanischen Leistungsverzweigungsgetriebes 4 vom Verbrennungsmotor 3 entkoppelt sind. Bei derart unterbrochenem Kraftschluss werden diese Komponenten also nicht angetrieben (anders als im "aktiven Stillstand"). In der Folge reduziert sich der Kraftstoffverbrauch des Verbrennungsmotors 3 und entwickelt sich im Leistungsverzweigungsgetriebe 4 keine unnötige Wärme. Um jedoch in diesem Betriebsmodus "Neutral" ein ungewolltes Wegrollen des Traktors 1 (beispielsweise bei Halten auf geneigtem Gelände) zu vermeiden, verfügt der Traktor 1 über eine Feststellbremse 12, die auch ohne dauerhafte Kontrolle des Fahrers ein Halten des Traktors 1 im Stillstand gewährleisten soll.

Die Feststellbremse 12 des gezeigten Traktors 1 umfasst als wesentliche Elemente ein Paar von Reibelementen 15, die als Bremsbacken ausgeführt und beweglich gegenüber der Radnabe eines Vorderrads 6 angeordnet sind, einen mechanischen Bremszug 16 ("Bowdenzug") sowie einen in einer Fahrerkabine 19 des Traktors 1 angeordneten Handbremshebel 13. Ein erstes Ende des Bremszugs 16 ist mit dem Handbremshebel 13 verbunden, ein entgegengesetztes Ende des Bremszugs 16 steht mit den Reibelementen 15 in Wirkverbindung. Durch eine Betätigung des Handbremshebels 13, insbesondere durch ein Ziehen desselben nach oben, werden die Reibelemente 15 über den Bremszug 16 in Eingriff gebracht mit der Radnabe des Vorderrads 6, so dass dieses gebremst wird. Im wirksam aktivierten Zustand der Feststellbremse 12 hindert diese den Traktor 1 also am Wegrollen.

Ist die Feststellbremse 12 jedoch nicht ausreichend (oder versehentlich gar nicht) vom Fahrer angezogen worden, so könnte der Traktor 1 - im Betriebsmodus "Neutral" des Fahrantriebsstrangs 2 - dennoch ungewollt wegrollen. Um dies mit konstruktiv geringem Aufwand zu vermeiden, verfügt der Traktor 1 über Mittel, die den Fahrantriebsstrang 2 in Abhängigkeit zumindest eines Betriebskriteriums des Traktors 1 selbsttätig vom Betriebsmodus "Neutral" in einen Betriebsmodus "aktiver Stillstand" versetzen. Deren Funktionsweise und Wirkung sei nachfolgend erläutert.

Eine elektronische Steuereinheit 8 steht in Signalverbindung mit verschiedenen Sensoren und Komponenten der Traktors 1. Zu den Sensoren zählen: ein der Getriebeausgangswelle 10 zugeordneter Drehzahlsensor 11, mit dem sich eine Fahrgeschwindigkeit v des Traktors 1 erfassen lässt, ein dem Handbremshebel 13 zugeordneter Zustandssensor 14, mit dem sich ein Zustand Z_{B} des Handbremshebels 13 erfassen lässt, sowie ein dem Fahrersitz 17 zugeordneter Drucksensor 18, mit dem sich ein Zustand Zs des Fahrersitzes 17 (Anwesenheit eines Fahrers) erfassen lässt. Weiterhin ist die Steuereinheit 8 signalverbunden mit dem Verbrennungsmotor 3 und mit dem hydrostatisch-mechanischen Leistungsverzeigungsgetriebe 4.

In einer Betriebssituation, in welcher ein Fahrer den Traktor 1 bei laufendem Verbrennungsmotor 3 in den Betriebsmodus "Neutral" schaltet (beispielsweise während des Ankoppelns von Anbaugeräten an den Traktor, während einer Wartezeit vor einer Ampel, bei einer Verkehrsstauung etc.), kann der Fahrer die Feststellbremse 13 aktivieren, um ein Wegrollen des Traktors 1 zu vermeiden. In dieser Betriebssituation, d.h. bei laufendem Verbrennungsmotor 3 und im Betriebsmodus "Neutral" des Fahrantriebsstrangs 2, wird mittels der Steuereinrichtung 8 eine Abfrage von weiteren Betriebskriterien der Traktors 1 durchgeführt, um bei Vorliegen bestimmter Kriterien selbsttätig den "aktiven Stillstand" herbeizuführen und so den Traktor 1 im Stillstand zu halten bzw. den Traktor 1 zum Stillstand zu bringen. Verschiedene Kriterien sind denkbar, die zweckmäßigerweise für das Auslösen einer solchen Maßnahme berücksichtigt werden. Im Einzelnen können zu diesen Kriterien zählen: die sensorisch erfasste Geschwindigkeit v des Traktors 1, der sensorisch erfasste Zustand Z_{B} der Bremse 12, der sensorisch erfasste Zustand Zs bezüglich der Anwesenheit eines Fahrers.

Gemäß einer bevorzugten Ausführung der Erfindung überwacht die Steuereinrichtung 8 (bei laufendem Verbrennungsmotor 3 und im Betriebsmodus "Neutral" des Fahrantriebsstrangs 2) die sensorisch erfasste Geschwindigkeit v des Traktors 1. Weicht diese von null ab - oder überschreitet diese einen vorgegebenen Grenzwert - so gibt die Steuereinrichtung 8 über eine in der Fahrerkabine angeordnete Ausgabeeinrichtung 20 ein optisches und/oder akustisches Warnsignal (beispielsweise mit dem Inhalt: "Feststellbremse betätigen, um ein Wegrollen des Traktors zu verhindern") ab. Zugleich - oder mit einer kurzen zeitlichen Verzögerung - leitet die Steuereinrichtung 8 durch Ansteuerung des leistungsverzweigten Getriebes 4 und ggf. des Verbrennungsmotors 3 den "aktiven Stillstand" ein, um den Traktor 1 wieder zum Stillstand zu bringen. Damit ist auf konstruktiv einfache Weise eine Sicherheitsmaßnahme geschaffen, den Traktor 1 vor ungewolltem Wegrollen zu bewahren. Alternativ oder ergänzend zu einer wie zu Beginn dieses Absatz beschriebenen Überwachung der Geschwindigkeit v des Traktors kann durch die Steuereinrichtung 8 auch allgemein eine Bewegung des Traktors 1 überwacht werden, beispielsweise anhand von Informationen über Drehzahl (Abtriebswelle) und Zeit, woraus sich das Zurücklegen einer Wegstrecke des Traktors errechnen lässt. In diesem Fall wird der selbsttätige aktive Stillstand beispielsweise eingeleitet, wenn der Traktor 1 eine bestimmte Strecke (z.B. einen halben Meter) zurückgelegt hat.

Es kann vorgesehen sein, dass die Steuereinrichtung 8, bevor diese den aktiven Stillstand herbeiführt, neben der Geschwindigkeit v und/oder Wegstrecke des Traktors 1 weitere Kriterien berücksichtigt. Insbesondere kann vorgesehen sein, dass der Zustand Z_{B} des Handbremshebels 13 berücksichtigt wird. Beispielsweise kann als Bedingung gelten, dass der Handbremshebel 13 aktiviert sein muss. In diesem Fall setzt die selbsttätige Stillstandsregelung also nur dann ein, wenn der Fahrer durch Ziehen des Handbremshebels 13 zu erkennen gegeben hat, dass ein Stillstand des Traktors 1 gewünscht ist. Diese Bedingung ist insofern zweckmäßig, als dass der Fahrer den Betriebsmodus "Neutral" auch gewählt haben könnte, um den Traktor 1 bewusst frei rollen zu lassen (beispielsweise um den Traktor abzuschleppen).

Ergänzend oder alternativ kann vorgesehen sein, dass die selbsttätige Stillstandsregelung einsetzt, wenn der Fahrersitz 17 unbesetzt ist, was beispielsweise über einen dem Fahrersitz 17 zugeordneten Drucksensor 18 erfassbar ist. In diesem Fall wird also ein Wegrollen (Geschwindigkeit v ungleich null oder überschreitet Grenzwert) stets verhindert, wenn der Fahrersitz unbesetzt ist - grundsätzlich unabhängig vom Zustand Z_{B} des Handbremshebels 13.

Im Ergebnis wird durch die Erfindungsidee auf vorteilhafte Weise die ohnehin an landwirtschaftlichen Fahrzeugen, insbesondere Traktoren der genannten Art verfügbare Funktionalität der aktiven Stillstandsregelung nutzbar gemacht, um die Sicherheit des Fahrzeugs zu erhöhen. Somit wird die Funktionalität einer elektronisch unterstützten aktiven Parkbremse (d.h. selbsttätiges Aktivieren bei laufendem Motor) bereitgestellt, ohne dass dazu eine zusätzliche Ausstattung des Fahrzeugs erforderlich ist.

### Bezugszeichenliste

- 1: Traktor
- 2: Fahrantriebsstrang
- 3: Verbrennungsmotor
- 4: hydrostatisch-mechanisches Leistungsverzweigungsgetriebe
- 5: Hinterachse
- 6: Vorderrad
- 7: Hinterrad
- 8: elektronische Steuereinheit
- 9: Motorabtriebswelle
- 10: Getriebeausgangswelle
- 11: Sensor
- 12: Feststellbremse
- 13: Handbremshebel
- 14: Sensor
- 15: Reibelement
- 16: Bremszug
- 17: Fahrersitz
- 18: Sensor
- 19: Fahrerkabine
- 20: optische/akustische Ausgabeeinrichtung

- i: Getriebeübersetzung
- v: Fahrgeschwindigkeit
- Z_{B}: Zustand Feststellbremse
- Zs: Zustand Fahrersitz

## Patentansprüche

1. Landwirtschaftliches Fahrzeug, insbesondere Traktor (1), mit einem Fahrantriebsstrang (2), umfassend einen Verbrennungsmotor (3), der betreibbar ist, über ein hydrostatisch-mechanisches Leistungsverzweigungsgetriebe (4) mit stufenlos veränderlicher Übersetzung (i) Bodeneingriffsmittel (7) des Fahrzeugs anzutreiben, wobei der Fahrantriebsstrang (2) in einen Betriebsmodus "Neutral" bringbar ist, in welchem ein Kraftschluss zwischen Verbrennungsmotor (3) und Bodeneingriffsmitteln (7) unterbrochen ist, und in einem Betriebsmodus "aktiver Stillstand" bringbar ist, in welchem eine vom Verbrennungsmotor (3) in das Leistungsverzweigungsgetriebe (4) eingehende Leistung zum Halten einer Ausgangswelle (10) des Leistungsverzweigungsgetriebes (4) bei einer Drehzahl null genutzt wird,
**gekennzeichnet durch** Mittel (8), die den Fahrantriebsstrang in Abhängigkeit zumindest eines Betriebskriteriums (v, Z_{B}, Z_{S}) des Fahrzeugs vom Betriebsmodus "Neutral" in den Betriebsmodus "aktiver Stillstand" versetzen, wobei der Antriebsstrang (2) aus dem Betriebsmodus "Neutral" in den "aktiven Stillstand" versetzt wird, wenn zumindest die folgenden Bedingungen zugleich erfüllt sind:
a) der Verbrennungsmotor (3) läuft, und
b) der Fahrantriebsstrang (2) befindet sich im Betriebsmodus "Neutral",
c) gemäß dem sensorisch erfassten Zustand (ZB) der Betätigungseinrichtung (13) ist die Bremse (12) aktiviert und/oder
d) die sensorisch erfasste Geschwindigkeit (v) des Fahrzeugs (1) und/oder ein zurückgelegter Weg des Fahrzeugs (1) ist ungleich null o-der größer als ein festgelegter Grenzwert und/oder
e) gemäß einem sensorisch erfassten Zustand (ZS) ist der Fahrersitz (17) des Fahrzeugs (1) unbesetzt.

2. Fahrzeug nach Anspruch 1, **dadurch gekennzeichnet, dass** diesem eine manuell betätigbare Bremse, insbesondere eine Feststellbremse (12), zugeordnet ist, die dazu nutzbar ist, das Fahrzeug (1) im Betriebsmodus "Neutral" des Fahrantriebsstrangs (2) zu bremsen.

3. Fahrzeug nach Anspruch 2, **dadurch gekennzeichnet, dass** sich die manuell betätigbare Bremse (12) über eine Betätigungseinrichtung (13) bedienen lässt, wobei der Betätigungseinrichtung (13) ein Sensor (11) zur Erfassung deren Zustands (Z_{B}) zugeordnet ist.

4. Fahrzeug nach einem der vorigen Ansprüche, **dadurch gekennzeichnet, dass** das Fahrzeug (1) über eine Einrichtung (11) zur Erfassung einer Geschwindigkeit (v) des Fahrzeugs (1) verfügt.

5. Fahrzeug nach einem der vorigen Ansprüche, **dadurch gekennzeichnet, dass** es sich bei dem zumindest einen Betriebskriterium, in dessen bzw. deren Abhängigkeit der "aktive Stillstand" herbeigeführt wird, handelt um: eine sensorisch erfasste Geschwindigkeit (v) des Fahrzeugs (1), einen sensorisch erfassten Zustand (Z_{B}) der Bremse (12), einen sensorisch erfassten Zustand (Zs) bezüglich der Anwesenheit eines Fahrers, einen Betriebszustand des Verbrennungsmotors (3), einen Betriebsmodus des Fahrantriebsstrangs (2).

6. Fahrzeug nach einem der vorigen Ansprüche, **dadurch gekennzeichnet, dass** das Herbeiführen des "aktiven Stillstands" mit einer zeitlichen Verzögerung ab Vorliegen eines oder mehrerer der Betriebskriterien stattfindet.

## Claims

1. An agricultural vehicle, in particular a tractor (1), comprising a drive train (2) including an internal combustion engine (3) which is operable to drive ground-engaging means (7) of the vehicle by way of a hydrostatic-mechanical power-split transmission (4) with a continuously variable transmission ratio (i), wherein the drive train (2) can be put into an operating mode "neutral" in which a power transfer between the internal combustion engine (3) and the ground-engaging means (7) is interrupted and can be put into an operating mode "active standstill" in which power coming into the power-split transmission (4) from the internal combustion engine (3) is used to hold an output shaft (10) of the power-split transmission (4) at a zero rotary speed,
**characterised by** means (8) which in dependence on at least one operating criterion (v, Z_{B}, Z_{S}) of the vehicle switch the drive train from the operating mode "neutral" into the operating mode "active standstill", wherein the drive train is switched from the operating mode "neutral" into the "active standstill" when at least the following conditions are fulfilled at the same time:
a) the internal combustion engine (3) is running, and
b) the drive train (2) is in the operating mode "neutral",
c) in accordance with the state (ZB) detected by sensor means of the actuating device (13) the brake (12) is activated and/or
d) the speed (v) detected by sensor means of the vehicle (1) and/or a travel distance covered by the vehicle (1) is not equal to zero or is greater than a defined limit value and/or
e) in accordance with a state (ZS) detected by sensor means the driver's seat (17) of the vehicle (1) is unoccupied.

2. A vehicle according to claim 1 **characterised in that** associated therewith is a manually operable brake, in particular the parking brake (12), which can be used to brake the vehicle (1) in the operating mode "neutral" of the drive train (2).

3. A vehicle according to claim 2 **characterised in that** the manually operable brake (12) can be operated by way of an actuating device (13), wherein associated with the actuating device (13) is a sensor (11) for detecting the state (Z_{B}) thereof.

4. A vehicle according to one of the preceding claims **characterised in that** the vehicle (1) has a device (11) for detecting a speed (v) of the vehicle (1).

5. A vehicle according to one of the preceding claims **characterised in that** the at least one operating criterion, in dependence on which the "active standstill" is brought about, involves: a speed (v) detected by sensor means of the vehicle (1), a state (Z_{B}) detected by sensor means of the brake (12), a state (Z_{S}) detected by sensor means with respect to the presence of a driver, an operating state of the internal combustion engine (3), and an operating mode of the drive train (2).

6. A vehicle according to one of the preceding claims **characterised in that** implementation of the "active standstill" takes place with a time delay from the presence of one or more of the operating criteria.

## Revendications

1. Véhicule agricole, en particulier tracteur (1), comprenant une chaîne de transmission (2), incluant un moteur à combustion interne (3) qui est exploitable pour entraîner des moyens de prise au sol (7) du véhicule par l'intermédiaire d'une transmission hydrostatique-mécanique à répartition de puissance (4) à démultiplication à fonctionnement continu (i), la chaîne de transmission (2) pouvant être amenée dans un mode de fonctionnement « neutre », dans lequel une conjugaison de forces entre moteur à combustion interne (3) et moyens de prise au sol (7) est interrompue, et pouvant être amenée dans un mode de fonctionnement « arrêt actif », dans lequel une puissance transférée du moteur à combustion interne (3) à la transmission à répartition de puissance (4) est utilisée pour maintenir un arbre de sortie (10) de la transmission à répartition de puissance (4) en présence d'un régime nul, **caractérisé par** des moyens (8) qui déplacent la chaîne de transmission du mode de fonctionnement « neutre » au mode de fonctionnement « arrêt actif » en fonction d'au moins un critère de fonctionnement (v, Z_{B}, Z_{S}) du véhicule, la chaîne de transmission (2) étant déplacée du mode de fonctionnement « neutre » à « arrêt actif » si au moins les conditions suivantes sont remplies simultanément :
a) le moteur à combustion interne (3) tourne, et
b) la chaîne de transmission (2) se trouve en mode de fonctionnement « neutre »,
c) suivant l'état (ZB), détecté par capteur, de l'équipement d'actionnement (13), le frein (12) est activé et/ou
d) la vitesse (v), détectée par capteur, du véhicule (1) et/ou un distance parcourue par le véhicule (1) sont différentes de zéro ou supérieures à une valeur limite définie et/ou
e) suivant un état (ZS), détecté par capteur, le siège conducteur (17) du véhicule (1) est inoccupé.

2. Véhicule selon la revendication 1, **caractérisé en ce qu'**à celui-ci est associé un frein actionnable manuellement, en particulier un frein de stationnement (12), qui est utilisable pour freiner le véhicule (1) en mode de fonctionnement « neutre » de la chaîne de transmission (2).

3. Véhicule selon la revendication 2, **caractérisé en ce que** le frein actionnable manuellement (12) peut être utilisé par l'intermédiaire d'un équipement d'actionnement (13), à l'équipement d'actionnement (13) étant associé un capteur (11) pour détecter son état (Z_{B}).

4. Véhicule selon une des revendications précédentes, **caractérisé en ce que** le véhicule (1) dispose d'un équipement (11) pour détecter une vitesse (v) du véhicule (1).

5. Véhicule selon une des revendications précédentes, **caractérisé en ce que** le au moins un critère de fonctionnement, en fonction duquel, respectivement desquels l'« arrêt actif » est instauré, correspond à : une vitesse (v), détectée par capteur, du véhicule (1), un état (Z_{B}), détecté par capteur, du frein (12), un état (Z_{S}), détecté par capteur, relatif à la présence d'un conducteur, un état de fonctionnement du moteur à combustion interne (3), un mode de fonctionnement de la chaîne de transmission (2).

6. Véhicule selon une des revendications précédentes, **caractérisé en ce que** l'instauration de l'« arrêt actif » intervient avec un retard temporel à partir de la présence d'un ou plusieurs des critères de fonctionnement.
